# EUROPEAN PATENT APPLICATION

(11) **EP 4 769 953 A1**
(43) Date of publication of application: **01.07.2026**
(21) Application number: 25227335.4
(22) Date of filing: 29.12.2025
(51) Int. Cl.: H04B 1/00

(54) **COMMUNICATION DEVICE AND COMMUNICATION CONTROL METHOD**

(30) Priority: 31.12.2024 CN 202412000131
(71) Applicant: GUANGDONG OPPO MOBILE TELECOMMUNICATIONS CORP., LTD., Dongguan, Guangdong 523860 (CN)
(72) Inventor: CHEN, Feng, No.18 Haibin Road Wusha,Chang'an,Dongguan Guangdon, 523860 (CN); TONG, Lin, No.18 Haibin Road Wusha,Chang'an,Dongguan Guangdon, 523860 (CN)
(74) Representative: Penza, Giancarlo

(57) **Abstract**

The present disclosure relates to a communication device and a communication control method. The communication device includes a radio frequency transceiver, multiple radio frequency modules, a radio frequency power supply, and an electric power supply. When the communication device is configured to support a standalone mode, the radio frequency power supply outputs a radio frequency voltage to individual radio frequency modules ready for transmission that are conductively connected to one transmission channel group, the radio frequency voltage being determined based on the power information of each radio frequency module. This can meet the higher power demand and greater radio frequency power consumption of each radio frequency module ready for transmission in the standalone mode. When the communication device is configured to support a combined mode of frequency bands of different transmission channel groups, the radio frequency power supply outputs the radio frequency voltage to a radio frequency module ready for transmission that are conductively connected to one transmission channel group, and the electric power supply outputs a power supply voltage to other radio frequency modules ready for transmission that are conductively connected to another transmission channel group. Different radio frequency modules simultaneously transmit radio frequency signals from different channel groups under the power supply of different power supplies, which can support the non-standalone mode and also the DSDA mode.

## Description

### TECHNICAL FIELD

The present disclosure relates to the field of radio frequency (RF) technologies, and particularly to a communication device and a communication control method.

### BACKGROUND

With the development of communication technology, the demand for combined communication of different frequency bands is increasing.

However, for communication devices that support only the standalone (SA) mode, due to cost considerations, only one radio frequency power supply is usually configured inside the device to supply power to the radio frequency modules of the radio frequency front-end, which greatly limits the user experience brought by such electronic devices.

### SUMMARY

Embodiments of the present disclosure provide a communication device and a communication control method, which can enable combined communication of more frequency bands on the basis of supporting the SA mode, improve the communication performance of the communication device, and enhance the user experience. The invention is set out in the appended set of claims.

In the above communication device and communication control method, the communication device includes a radio frequency transceiver, multiple radio frequency modules, a radio frequency power supply, and an electric power supply. The radio frequency transceiver includes a first transmission channel group and a second transmission channel group, and each of the first transmission channel group and the second transmission channel group includes multiple transmission channels. At least one of the multiple radio frequency modules is switchably connected to the first transmission channel group or the second transmission channel group. The radio frequency power supply is a power supply dedicated for radio frequency, which supplies power to the radio frequency modules. The electric power supply is a public power supply in the communication device, which is capable of supplying power to the radio frequency modules and other modules. In a case where the communication device is configured to support the standalone mode, each radio frequency module ready for transmission is conductively connected to the first transmission channel group, and the radio frequency power supply outputs a radio frequency voltage to each radio frequency module ready for transmission. Since the radio frequency voltage is determined based on the power information of each radio frequency module ready for transmission, it can ensure the greater power demand and higher radio frequency power consumption of each radio frequency module ready for transmission in the standalone mode, meeting more stringent frequency band coverage, signal quality, and user requirements. In a case where the communication device is configured to support the combined mode of frequency bands of different transmission channel groups, the radio frequency power supply is used to output the radio frequency voltage to the radio frequency module(s) ready for transmission that is/are conductively connected to one transmission channel group, and the electric power supply is used to output the power supply voltage to the radio frequency module(s) ready for transmission that is/are conductively connected to another transmission channel group, ensuring that different radio frequency modules simultaneously transmit radio frequency signals from different channel groups under the power supply of different power supplies. In this way, not only the non-standalone mode but also the DSDA mode are supported. Thus, without adding an additional power supply, the communication device supporting the standalone mode can also support combined communication of more frequency bands on the basis of supporting the standalone mode, which improves the communication performance of the communication device and enhances the user experience.

### BRIEF DESCRIPTION OF THE DRAWINGS

In order to more clearly illustrate the technical solutions in the embodiments of the present disclosure, drawings required for the description of the embodiments will be briefly introduced below. Apparently, the drawings described below are only some embodiments of the present disclosure. For those ordinary skilled in the art, other drawings can be obtained according to these drawings without paying any creative work.
FIG. 1 is a first structural block diagram of a communication device provided in the embodiments.
FIG. 2 is a second structural block diagram of the communication device provided in the embodiments.
FIG. 3 is a third structural block diagram of the communication device provided in the embodiments.
FIG. 4 is a fourth structural block diagram of the communication device provided in the embodiments.
FIG. 5 is a fifth structural block diagram of the communication device provided in the embodiments.
FIG. 6 is a first flowchart of a communication control method provided in the embodiments.
FIG. 7 is a second flowchart of the communication control method provided in the embodiments.
FIG. 8 is a first structural block diagram of a communication control apparatus provided in the embodiments.
FIG. 9 is a second structural block diagram of the communication control apparatus provided in the embodiments.

### DETAILED DESCRIPTION OF PREFERRED EMBODIMENTS

In order to make the objectives, technical solutions and advantages of the present disclosure more clearly, the present disclosure will be further described in detail below in conjunction with the drawings and embodiments. It is understandable that the specific embodiments described herein are only used to explain the present disclosure, and should not be regarded as limiting the present disclosure.

It is understandable that terms "first", "second", etc. used in the present disclosure may be used to describe various elements herein, but these elements are not limited by these terms. These terms are only used to distinguish one element from another element, and cannot be understood as indicating or implying relative importance or implicitly indicating the number of indicated technical features. Thus, a feature defined by "first" and "second" may explicitly or implicitly include at least one of such feature. In the description of the present disclosure, the meaning of "plurality of/multiple" is at least two, such as two, three, etc., unless otherwise explicitly and specifically limited.

It is notable that, when an element is referred to as being "arranged on" another element, it may be directly on the other element or there may be an intermediate element. When an element is considered to as being "connected" to another element, it may be directly connected to the other element or there may also be an intermediate element.

The communication device involved in the embodiments of the present disclosure has a wireless communication function, and may be a handheld device, a vehicle-mounted device, an intelligent vehicle, a wearable device, a computing device, or other processing devices connected to a wireless modem, as well as various forms of User Equipment (UE) (e.g., a mobile phone), a mobile station (MS), and the like. For convenience of description, the above-mentioned devices are collectively referred to as communication devices.

The communication device in the embodiments of the present disclosure is configured to support the standalone (SA) mode of the 5G New Radio (NR), and can also support the Non-standalone (NSA) mode of the 5G NR. For example, it may support the Non-standalone mode of the EN-DC architecture, and may also support combined communications of more different frequency bands under Dual SIM Dual Active (DSDA), and combined communication of uplink carrier aggregation (CA).

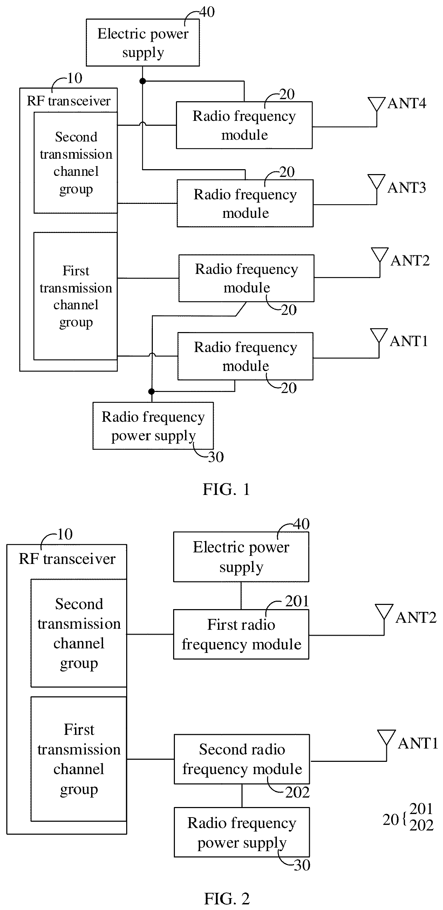

FIG. 1 is a structural block diagram of a communication device provided in an embodiment of the present disclosure. As illustrated in FIG. 1, in the embodiment, the communication device includes a radio frequency transceiver 10, multiple radio frequency modules 20, a radio frequency power supply 30, and an electric power supply 40 (FIG. 1 illustrates an example that there are four radio frequency modules and each radio frequency module is conductively connected to one of the power supplies and one of the transmission channel groups in a final state).

The radio frequency transceiver 10 includes a first transmission channel group and a second transmission channel group, and each of the first transmission channel group and the second transmission channel group includes multiple transmission channels. The transmission channels of the first transmission channel group and the transmission channels of the second transmission channel group are independent from each other, and do not interfere with each other. The first transmission channel group may be configured to output radio frequency signals of a first network standard, and the second transmission channel group may be configured to output radio frequency signals of a second network standard. According to the communication mode configured for the communication device, the first network standard and the second network standard may be configured to be the same or different. Exemplarily, the first network standard may be a 5G NR network standard, and the second network standard may be a 4G LTE network standard; and when the communication device is configured to support the standalone mode, radio frequency signals are output by the first transmission channel group.

For the multiple radio frequency modules 20, at least one of the radio frequency modules 20 is switchably connected to the first transmission channel group or the second transmission channel group. Each radio frequency module 20 may receive radio frequency signals output by the transmission channel in the transmission channel group to which the radio frequency module is conductively connected, and perform power amplification on the radio frequency signals. In the case where the communication device is configured with different communication modes, at least one of the radio frequency modules 20 is capable of being conductively connected to the first transmission channel group to receive radio frequency signals output by the transmission channels in the first transmission channel group and perform power amplification on the radio frequency signals, it is also capable of being conductively connected to the second transmission channel group to receive radio frequency signals output by the transmission channels in the second transmission channel group and perform power amplification on the radio frequency signals. The frequency bands that the multiple radio frequency modules 20 support power amplification therefor may be the same or different.

Exemplarily, the radio frequency module 20 may include a power amplifier (PA), or a multi-band multi-mode power amplifier (MMPA) integrating multiple power amplifiers, to realize power amplification processing on radio frequency signals of a first frequency band. Exemplarily, the radio frequency module 20 may also be an LNA-PA ASM module with integrated filter (LPAF, which is power amplifier switch module integrated with filter and low noise amplifier), to realize functions such as low-noise amplification and filtering while realizing power amplification of radio frequency signals. Exemplarily, the radio frequency module 20 may also be a power amplifier module with a built-in low-noise amplifier (L-PA Mid, PA Mid With LNA).

In the embodiments, the radio frequency power supply 30 and the electric power supply 40 respectively provide voltages to their conductively connected radio frequency modules 20, so that the radio frequency modules 20 perform, under the action of the voltages, power amplification on the radio frequency signals from the radio frequency receiver.

The radio frequency power supply 30 may be regarded as a power supply dedicated for radio frequency, which supplies power to the radio frequency modules 20. The radio frequency power supply 30 may provide, according to the power information of a radio frequency module 20, a radio frequency voltage that meets the specific requirements of the radio frequency module 20 for voltage and current during operation. Exemplarily, the radio frequency power supply 30 may detect the power information of each radio frequency module 20, or may be configured with a power information mapping table of the individual radio frequency modules 20, and the power information of each radio frequency module 20 may be determined based on the power information mapping table.

Exemplarily, the radio frequency power supply 30 may include a radio frequency power supply management chip supporting multi-level voltage output. The radio frequency power supply 30 may provide multiple different voltage levels for flexible configuration, to meet the different needs of different radio frequency modules 20. Exemplarily, the radio frequency power supply 30 may work in an envelope tracking (ET) mode. The ET mode may track the envelope of the signal in real time and dynamically adjust the radio frequency voltage according to the instantaneous power of the signal, which helps to significantly improve the overall transmission efficiency and reduce power consumption. The radio frequency power supply 30 may also work in an average power tracking (APT) mode. The APT mode dynamically adjusts the radio frequency voltage for the radio frequency module according to the change of the average power, thereby achieving a more stable output power and helping to significantly improve the transmission stability.

The electric power supply 40 may be regarded as a public power supply in the communication device. The electric power supply is mainly configured to supply power to each module in the communication device. Alternatively, the electric power supply is a power supply dedicated for other modules except the radio frequency modules 20, which is mainly configured to supply power to other specific modules except the radio frequency modules 20. In the embodiments, the existing public power supply or the dedicated power supply of other modules in the communication device may also be configured to supply power to the radio frequency modules 20.

Exemplarily, the electric power supply 40 may include a battery module. The battery module may include a battery. The battery, as a public power supply of the communication device, may provide a battery supply voltage to each module in the communication device. The battery module may also include a power rail related to the battery voltage. The power rail outputs a power supply voltage (VPH_PWR2) at a preset ratio based on the battery voltage (VPH_PWR1). As the battery power decreases, the power supply voltage (VPH_PWR2) gradually decreases. Alternatively, the battery module may also include a voltage regulation circuit connected to the battery, such as a buck or boost (BOB) circuit, which adjusts the battery voltage at a preset ratio and then outputs the power supply voltage. Usually, the preset ratio is fixed after being set.

In the related art, since 5G SA only devices need to support only the 5G SA mode, due to cost considerations, only one power supply is usually configured inside the device to supply power to the radio frequency modules 20 of the radio frequency front-end, which is unable to support ENDC, DSDA, etc.

In the communication device provided in the embodiments, in the case where the communication device is configured to support the standalone mode, each radio frequency module 20 ready (selected) for transmission is conductively connected to the first transmission channel group, and the radio frequency power supply 30 outputs a radio frequency voltage to each radio frequency module 20 ready for transmission. Since the radio frequency voltage is determined based on the power information of each radio frequency module 20 ready for transmission, it can ensure the greater power demand and higher radio frequency power consumption of each radio frequency module 20 ready for transmission in the standalone mode, meeting more stringent frequency band coverage, signal quality, and user requirements. In a case where the communication device is configured to support a combined mode of frequency bands of different transmission channel groups, such as DSDA combined communication and ENDC combined communication, two radio frequency modules 20 working simultaneously need to be connected to different transmission channels and different power supplies, the radio frequency power supply 30 is configured to output the radio frequency voltage to a radio frequency module 20 conductively connected to one transmission channel group, and the electric power supply 40 is configured to output the power supply voltage to other radio frequency modules 20 conductively connected to another transmission channel group, which can ensure that different radio frequency modules 20 simultaneously transmit radio frequency signals from different channel groups under the power supply of different power supplies, thereby supporting the non-standalone mode and also the DSDA mode.

Thus, without adding an additional power supply, the communication device supporting the standalone mode can also support combined communication of more frequency bands on the basis of supporting the standalone mode, which improves the communication performance of the communication device, and enhances the user experience.

In an embodiment, as illustrated in FIG. 2, the multiple radio frequency modules 20 include a first radio frequency module 201 and a second radio frequency module 202 (FIG. 2 illustrates an example that there are one first radio frequency module 201 and one second radio frequency module 202 and each radio frequency module 20 is conductively connected to one of the power supplies and one of the transmission channel groups in the final state).

The first radio frequency module 201 is switchably connected to the radio frequency power supply 30 or the electric power supply 40, and is switchably connected to the first transmission channel group or the second transmission channel group, for supporting the transmission of radio frequency signals of a first frequency band. The second radio frequency module 202 is connected to the radio frequency power supply 30 and the first transmission channel group, for supporting the transmission of radio frequency signals of a second frequency band. The second frequency band is higher than the first frequency band.

The first radio frequency module 201 receives a first frequency band signal from its conductively connected transmission channel and perform power amplification on the first frequency band signal, to support transmission of the first frequency band signal. The second radio frequency module 202 receives a second frequency band signal from its conductively connected transmission channel and performs power amplification on the second frequency band signal, to support transmission of the second frequency band signal.

The radio frequency voltage output by the radio frequency power supply 30 may be greater than the power supply voltage output by the electric power supply 40, or may also be less than the power supply voltage output by the electric power supply 40. The radio frequency power supply 30 may flexibly output different radio frequency voltages to match the power demands of the radio frequency modules 20. For example, in a case where the communication device is configured to support a combined mode of the first frequency band and the second frequency band of different transmission channel groups, the radio frequency power supply 30 outputs the radio frequency voltage to the second radio frequency module 202 conductively connected to one transmission channel group, and the electric power supply 40 outputs the power supply voltage to the first radio frequency module 201 conductively connected to another transmission channel group.

The radio frequency power supply 30 may output a corresponding radio frequency voltage based on the power information of the radio frequency module 20. The second frequency band is higher than the first frequency band, and correspondingly, the power demand of the second radio frequency module 202 is higher than the power demand of the first radio frequency module 201. Therefore, the radio frequency power supply 30 is configured to preferentially supply power to the radio frequency module 20 supporting the second frequency band, and the electric power supply 40 is configured to supply power to the radio frequency module 20 supporting the first frequency band. This can better match the power supply demand of each radio frequency module 20, and improve the transmission quality of each radio frequency module 20.

Exemplarily, the first frequency band may include any one of a low frequency band, a medium frequency band, and a high frequency band. The second frequency band may include any one of the medium frequency band, the high frequency band, and an ultra-high frequency band, and the second frequency band is higher than the first frequency band.

Exemplarily, the first frequency band may include the high frequency band, and the second frequency band may include the ultra-high frequency band. The first transmission channel group may include a first ultra-high frequency transmission channel and a first high frequency transmission channel, the first ultra-high frequency transmission channel is configured to output ultra-high frequency signals of the first network standard, and the first high frequency transmission channel is configured to output high frequency signals of the first network standard. The second transmission channel group may include a second ultra-high frequency transmission channel and a second high frequency transmission channel, the second ultra-high frequency transmission channel is configured to output ultra-high frequency signals of the second network standard, and the second high frequency transmission channel is configured to output high frequency signals of the second network standard. The first radio frequency module 201 may receive high frequency signals by being switchably connected to the first high frequency transmission channel or the second high frequency transmission channel. The second radio frequency module 202 may receive ultra-high frequency signals by being switchably connected to the first ultra-high frequency channel or the second ultra-high frequency transmission channel. Taking a case where the first network standard is different from the second network standard as an example, the second frequency band signal is for example an N78 radio frequency signal, and the first frequency band signal is for example a B41 frequency band signal.

Exemplarily, the first frequency band may include the low frequency band, and the second frequency band may include the medium frequency band. The first transmission channel group may include a first low frequency transmission channel and a first medium frequency transmission channel, the first low frequency transmission channel is configured to output low frequency signals of the first network standard, and the first medium frequency transmission channel is configured to output medium frequency signals of the first network standard. The second transmission channel group may include a second low frequency transmission channel and a second medium frequency transmission channel, the second low frequency transmission channel is configured to output low frequency signals of the second network standard, and the second medium frequency transmission channel is configured to output medium frequency signals of the second network standard. The first radio frequency module 201 may receive low frequency signals by being switchably connected to the first low frequency transmission channel or the second low frequency transmission channel. The second radio frequency module 202 may receive medium frequency signals by being switchably connected to the first medium frequency channel or the second medium frequency transmission channel. Taking a case where the first network standard is different from the second network standard as an example, the low frequency signal is for example an N28 radio frequency signal, and the medium frequency signal is for example a B1 or B3 frequency band signal; alternatively, the low frequency signal is for example a B28 radio frequency signal, and the medium frequency signal is for example an N1 or N3 frequency band signal.

It is understandable that the embodiment exemplifies that the first radio frequency module 201 is switchably connected to the radio frequency power supply 30 or the electric power supply 40, and is switchably connected to the first transmission channel group or the second transmission channel group. In some other embodiments, the second radio frequency module 202 may also be switchably connected to the radio frequency power supply 30 or the electric power supply 40, and is switchably connected to the first transmission channel group or the second transmission channel group; and the first radio frequency module 201 may also be directly connected to the radio frequency power supply 30 and one of the transmission channel groups, which is not limited in the present disclosure.

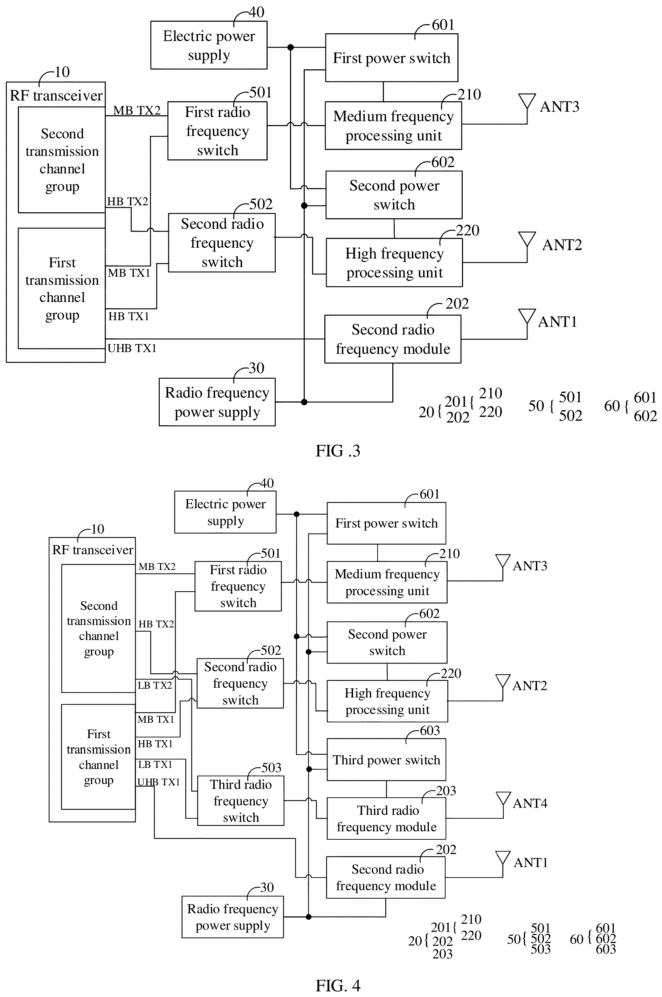

In an embodiment, taking a case where the first frequency band includes the medium frequency band and the high frequency band as an example, as illustrated in FIG. 3, the first radio frequency module 201 includes a medium frequency processing unit 210 and a high frequency processing unit 220.

The high frequency processing unit 220 is switchably connected to the radio frequency power supply 30 or the electric power supply 40, and is switchably connected to the first transmission channel group or the second transmission channel group, for supporting the transmission of radio frequency signals of the high frequency band. The medium frequency processing unit 210 is switchably connected to the radio frequency power supply 30 or the electric power supply 40, and is switchably connected to the first transmission channel group or the second transmission channel group, for supporting the transmission of radio frequency signals of the medium frequency band.

The high frequency processing unit 220 is switchably connected to the first high frequency transmission channel of the first transmission channel group or the second high frequency transmission channel of the second transmission channel group, and is switchably connected to the radio frequency power supply 30 or the electric power supply 40. Thus, the high frequency processing unit 220 may receive high frequency signals of the first network standard, and may also be switched to receive high frequency signals of the second network standard. The high frequency processing unit 220 may receive the radio frequency voltage of the radio frequency power supply 30, and may also be switched to receive the power supply voltage of the electric power supply 40. As such, the standalone mode can be supported, and it also makes it possible to support combined modes of frequency bands, such as ENDC and DSDA. When there are multiple high frequency processing units 220, it can also support the uplink high frequency CA mode.

The medium frequency processing unit 210 is switchably connected to the first medium frequency transmission channel of the first transmission channel group or the second medium frequency transmission channel of the second transmission channel group, and is switchably connected to the radio frequency power supply 30 or the electric power supply 40. Thus, the medium frequency processing unit 210 may receive medium frequency signals of the first network standard, and may also be switched to receive medium frequency signals of the second network standard. The medium frequency processing unit 210 may receive the radio frequency voltage of the radio frequency power supply 30, and may also be switched to receive the power supply voltage of the electric power supply 40. As such, the standalone mode can be supported, and it also makes it possible to support combined modes of frequency bands, such as ENDC and DSDA. When there are multiple medium frequency processing units 210, it can also support the uplink medium frequency CA mode.

In a case where the communication device is configured to support a combined mode of the medium frequency band and the high frequency band of different transmission channel groups, the electric power supply 40 outputs the power supply voltage to the medium frequency processing unit 210, and the radio frequency power supply 30 outputs the radio frequency voltage to the high frequency processing unit 220. The radio frequency power supply 30 may output a corresponding radio frequency voltage based on the power information of the radio frequency module 20. The high frequency band is higher than the medium frequency band, and correspondingly, the power demand of the high frequency processing unit 220 is higher than the power demand of the medium frequency processing unit 210. Therefore, the radio frequency power supply 30 is configured to preferentially supply power to the high frequency processing unit 220, and the electric power supply 40 is configured to supply power to the medium frequency processing unit 210, which can better match the power supply demand of each processing unit and improve the transmission quality of the first radio frequency module 201.

In an embodiment, as illustrated in FIG. 3, the communication device further includes a radio frequency switch 50 and a power switch 60. The radio frequency switch 50 includes a first radio frequency switch 501 and a second radio frequency switch 502, and the power switch 60 includes a first power switch 601 and a second power switch 602.

The radio frequency switch 50 is configured to perform switching between the transmission channel groups, and the power switch 60 is configured to perform switching between the power supplies. Each switch has a first terminal and two second terminals. The first terminal of the first radio frequency switch 501 is connected to the radio frequency input terminal of the medium frequency processing unit 210, and the two second terminals of the first radio frequency switch 501 are respectively connected to the first transmission channel group and the second transmission channel group. The first terminal of the second radio frequency switch 502 is connected to the radio frequency input terminal of the high frequency processing unit 220, and the two second terminals of the second radio frequency switch 502 are respectively connected to the first transmission channel group and the second transmission channel group. The first terminal of the first power switch 601 is connected to the power supply terminal of the medium frequency processing unit 210, and the two second terminals of the first power switch 601 are respectively connected to the radio frequency power supply 30 and the electric power supply 40. The first terminal of the second power switch 602 is connected to the power supply terminal of the high frequency processing unit 220, and the two second terminals of the second power switch 602 are respectively connected to the radio frequency power supply 30 and the electric power supply 40.

The high frequency processing unit 220 is switchably connected to the first transmission channel group or the second transmission channel group through the second radio frequency switch 502, and the high frequency processing unit 220 is switchably connected to the radio frequency power supply 30 or the electric power supply 40 through the second power switch 602. The medium frequency processing unit 210 is switchably connected to the first transmission channel group or the second transmission channel group through the first radio frequency switch 501, and the medium frequency processing unit 210 is switchably connected to the radio frequency power supply 30 or the electric power supply 40 through the first power switch 601. By controlling the conduction states of the first radio frequency switch 501, the second radio frequency switch 502, the first power switch 601, and the second power switch 602, the connection states of each of the high frequency processing unit 220 and the medium frequency processing unit 210 ready for transmission with its target power supply and target radio frequency channel may be controlled, so as to realize the combined communication mode of two different frequency bands among the first frequency band (such as the medium frequency band, and the high frequency band) and the second frequency band.

Exemplarily, there may be multiple first radio frequency modules 201 (including for example multiple medium frequency processing units 210, and multiple high frequency processing units 220) and multiple second radio frequency modules 202, and correspondingly, there may be multiple corresponding switches. The communication device can also realize the combined mode of any two identical frequency bands among the first frequency band (such as the medium frequency band, and the high frequency band) and the second frequency band, and can also realize CA combined communication.

By setting the individual corresponding switches for the high frequency processing unit 220 and the medium frequency processing unit 210, the conduction state of the connection between each of the high frequency processing unit 220 and the medium frequency processing unit 210 with each power supply and each radio frequency channel may be independently controlled, and the switching of the power supply and the radio frequency channel can be performed more accurately.

Exemplarily, each of the first radio frequency switch 501 and the first power switch 601 may be arranged outside the medium frequency processing unit 210, or may be integrated with the medium frequency processing unit 210. Each of the second radio frequency switch 502 and the second power switch 602 may be arranged outside the high frequency processing unit 220, or may be integrated with the high frequency processing unit 220. As such, the switching to different power supplies and different transmission channel groups may be implemented through port connection. Alternatively, the above switches, the high frequency processing unit 220, and the medium frequency processing unit 210 may all be integrated with each other to form a medium and high frequency radio frequency chip with functions of switching power supply and transmission channel group. Alternatively, each radio frequency switch may be integrated with the processing unit to form a radio frequency chip with function of switching transmission channel group, and each power switch may be integrated with the radio frequency power supply 30 to form a radio frequency power supply 30 with function of switching power supply. The integration can improve the integration degree, which is also beneficial to the miniaturization of the radio frequency modules 20 and the radio frequency power supply 30 and the cost reduction.

It is understandable that, in some other embodiments, the switches may also be arranged in other combination forms, as long as the switchable connection state between the target radio frequency module 20, the target processing unit and each of the electric power supply and the radio frequency channel can be controlled, which is not further limited in the embodiments of the present disclosure.

In an embodiment, as illustrated in FIG. 4, the multiple radio frequency modules 20 further include a third radio frequency module 203.

The third radio frequency module 203 is switchably connected to the radio frequency power supply 30 or the electric power supply 40, and is switchably connected to the first transmission channel group or the second transmission channel group, for supporting the transmission of radio frequency signals of a third frequency band, where the third frequency band is lower than the first frequency band.

The combined mode of frequency bands of different transmission channel groups includes combined modes of any two frequency bands among the first frequency band, the second frequency band, and the third frequency band (i.e., modes in which any two frequency bands among the first frequency band, the second frequency band, and the third frequency band are combined). In the case where the communication device is configured to support the combined mode of frequency bands of different transmission channel groups, for at least two radio frequency modules 20 ready for transmission, the radio frequency power supply 30 outputs the radio frequency voltage to a radio frequency module 20 of the at least two radio frequency modules that supports a relatively higher frequency band, and the electric power supply 40 outputs the power supply voltage to a radio frequency module 20 of the at least two radio frequency modules that supports a relatively lower frequency band.

In the case where the communication device is configured to support the combined modes of any two frequency bands among the first frequency band, the second frequency band, and the third frequency band, the radio frequency power supply 30 is configured to supply power to a radio frequency module 20 supporting the relatively higher frequency band. The radio frequency power supply 30 may output a radio frequency voltage with a higher voltage value based on the power information of the radio frequency module 20 supporting the relatively higher frequency band, to match the power supply demand of the radio frequency module 20 supporting the relatively higher frequency band and ensure the transmission quality of the radio frequency module 20 supporting the relatively higher frequency band. For a radio frequency module 20 supporting the relatively lower frequency band, its power demand is relatively low, and such power demand can be met through power supply of the electric power supply 40. Thus, through the mutual cooperation of the radio frequency power supply 30 and the electric power supply 40, the power supply demand of each radio frequency module 20 can be better matched, and the transmission quality of each radio frequency module 20 can be improved.

Exemplarily, the first frequency band may include the high frequency band and the medium frequency band, the second frequency band may include the ultra-high frequency band, and the third frequency band may include the low frequency band. The first transmission channel group may include a first ultra-high frequency transmission channel, a first high frequency transmission channel, a first medium frequency transmission channel, and a first low frequency transmission channel, and these channels correspondingly output ultra-high frequency signals, high frequency signals, medium frequency signals, and low frequency signals of the first network standard respectively. The second transmission channel group may respectively include a second ultra-high frequency transmission channel, a second high frequency transmission channel, a second medium frequency transmission channel, and a second low frequency transmission channel, and these channels correspondingly output ultra-high frequency signals, high frequency signals, medium frequency signals, and low frequency signals of the second network standard respectively.

The combined mode of any two frequency bands among the first frequency band, the second frequency band, and the third frequency band configured for the communication device may include: DSDA combinations and ENDC combinations of LB+MB, LB+HB, LB+UHB, MB+LB, MB+HB, MB+UHB, HB+UHB, UHB+HB (the frequency band before "+" is a frequency band of the first network standard, and the frequency band after "+" is a frequency band of the second network standard). Further, when there are multiple first radio frequency modules 201, multiple second radio frequency modules 202, and multiple third radio frequency modules 203, the combines modes of any two frequency bands among the first frequency band, the second frequency band, and the third frequency band configured for the communication device may also include: 2CA combination, 3CA combined communication of each frequency band, etc.

Thus, the communication device can also support more DSDA combinations, ENDC combinations, and CA combination communications, on the basis of supporting the SA mode.

In an embodiment, as illustrated in FIG. 4, the radio frequency switch 50 further includes a third radio frequency switch 503, and the power switch 60 further includes a third power switch 603.

The first terminal of the third radio frequency switch 503 is connected to the radio frequency input terminal of the third radio frequency module 203, and the two second terminals of the third radio frequency switch 503 are respectively connected to the first transmission channel group and the second transmission channel group. The first terminal of the third power switch 603 is connected to the power supply terminal of the third radio frequency module 203, and the two second terminals of the third power switch 603 are respectively connected to the radio frequency power supply 30 and the electric power supply 40.

The third radio frequency module 203 is switchably connected to the first transmission channel group or the second transmission channel group through the third radio frequency switch 503, and the third radio frequency module 203 is switchably connected to the radio frequency power supply 30 or the electric power supply 40 through the third power switch 603. By controlling the conduction states of the third radio frequency switch 503 and the third power switch 603, the connection states of the third radio frequency module 203 ready for transmission with its target power supply and target radio frequency channel can be controlled independently and accurately, so as to realize the communication combined mode of the third frequency band with other frequency bands. When there are multiple third radio frequency modules 203, the communication combined mode of the third frequency band itself may be achieved.

Exemplarily, each of the third radio frequency switch 503 and the third power switch 603 may be arranged outside the third radio frequency module 203, or may be integrated with the third radio frequency module 203. Alternatively, the third radio frequency switch 503 may be integrated with the third radio frequency module 203 to form a radio frequency chip with function of switching transmission channel group, and the third power switch 603 may be integrated with the radio frequency power supply 30 to form a radio frequency power supply 30 with function of switching power supply. The integration can improve the integration degree, which is also beneficial to the miniaturization of the radio frequency modules 20 and the radio frequency power supply 30 and the cost reduction.

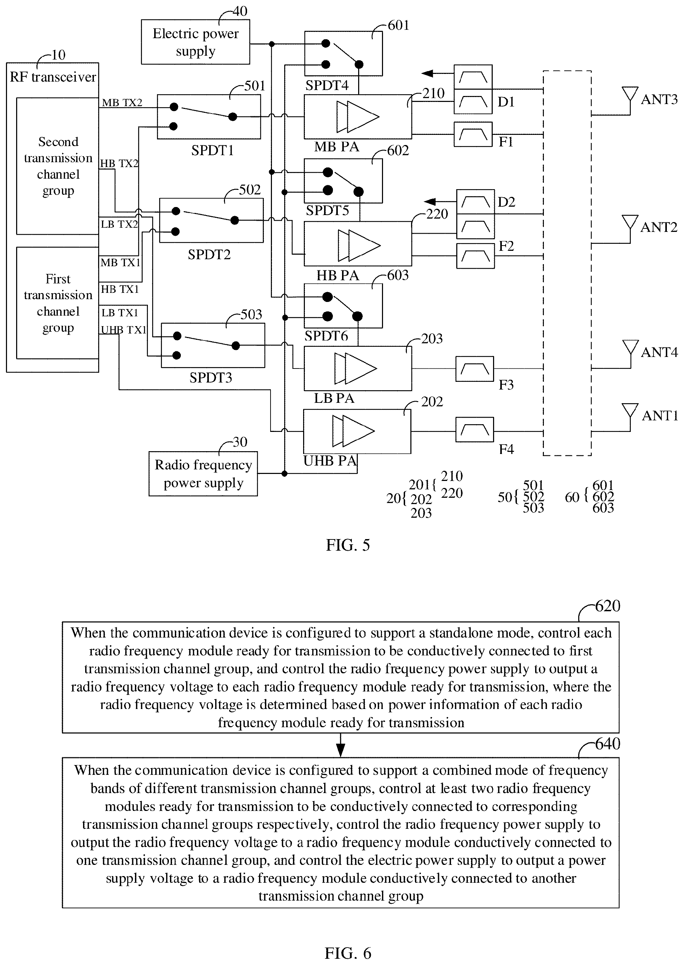

Exemplarily, as illustrated in FIG. 5, each of the above-mentioned radio frequency modules 20 includes a power amplifier, such as LB PA, MB PA, HB PA, and UHB PA shown in the figure. As illustrated in FIG. 5, each of the above-mentioned radio frequency switches and power switches may include a single-pole double-throw (SPDT) switch, and each switch has one first terminal and two second terminals. Exemplarily, each power amplifier may also be connected to an antenna through a radio frequency front-end module. For example, as illustrated in FIG. 5, each power amplifier may also be connected to an antenna through a single filter (such as F1, F2, F3, or F4 shown in the figure) and a duplex filter (such as D1, or D2 shown in the figure). It is understandable that each power amplifier may also be connected to an antenna through other radio frequency front-end modules not shown in the figure.

In some other embodiments, each of the above-mentioned radio frequency switches and power switches may also include two single-pole single-throw switches, and the common terminals of the two single-pole single-throw switches are connected together. The switch circuit composed of the two single-pole single-throw switches has one first terminal and two second terminals. For the connection relationships of the first terminal and the two second terminals, reference may be made to the above embodiments, which will not be repeated here.

In an embodiment, in a case where the communication device is configured to support a combined mode of frequency bands of different duplex communication types, and the duplex communication types include frequency division duplexing (FDD) and time division duplexing (TDD), for at least two radio frequency modules 20 ready for transmission, each radio frequency module 20 of the at least two radio frequency modules is conductively connected to one transmission channel group, the radio frequency power supply 30 outputs the radio frequency voltage to a radio frequency module 20 of the at least two radio frequency modules working in a FDD frequency band, and the electric power supply 40 outputs the power supply voltage to a radio frequency module 20 of the at least two radio frequency modules working in a TDD frequency band.

FDD utilizes frequency division for uplink and downlink communications which usually need to work on different frequency bands at the same time, and it usually requires power balance of transmission and reception of the system. Thus, the power demand of the radio frequency module 20 supporting the FDD frequency band is relatively high. TDD alternately transmits and receives data on the same frequency band, and may optimize power usage by dynamically allocating time slots. Thus, the power demand of the radio frequency module 20 supporting the TDD frequency band is relatively low. When some of the at least two radio frequency modules 20 ready for transmission support the FDD frequency band and some of them support the TDD frequency band, the radio frequency power supply 30 may be configured to supply power to the radio frequency module(s) 20 working in the FDD frequency band, the radio frequency power supply may output a radio frequency voltage matching the power information of the radio frequency module(s) 20, to ensure that the power demand of such radio frequency module(s) 20 is met. For the radio frequency module(s) 20 supporting the TDD frequency band, the power demand thereof is relatively low, which can be met through power supply of the electric power supply 40. Thus, through the mutual cooperation of the radio frequency power supply 30 and the electric power supply 40, the power supply demands of individual radio frequency modules 20 under different duplex communication types can be better matched, and the transmission quality of each radio frequency module 20 can be improved.

In some other embodiments, when the communication device is configured to support a combined mode of frequency bands of a same duplex communication type, such as working in the FDD frequency band or the TDD frequency band, for at least two radio frequency modules 20 ready for transmission, each of the at least two radio frequency modules 20 is conductively connected to one transmission channel group, the radio frequency power supply 30 outputs the radio frequency voltage to a radio frequency module 20 of the at least two radio frequency modules supporting a relatively higher frequency band, and the electric power supply 40 outputs the power supply voltage to a radio frequency module 20 of the at least two radio frequency modules supporting a relatively lower frequency band. In this way, it can better match the power supply demands of individual radio frequency modules 20 of different frequency bands under the same duplex communication type, and improve the transmission quality of each radio frequency module 20.

In an embodiment, the communication device further includes a control circuit. The control circuit is configured to control the radio frequency module 20 to be conductively connected to a target transmission channel group and a target power supply, based on the communication mode configured for the communication device.

The target transmission channel group includes any one of the first transmission channel group and the second transmission channel group, and the target power supply includes any one of the radio frequency power supply 30 and the electric power supply 40. The communication mode may include the standalone mode which may be simply regarded as a mode in which a frequency band or a combination of frequency bands of a transmission channel group of a same 5G network standard is provided. The communication mode may also include the combined mode of frequency bands of different transmission channel groups, for example the non-standalone mode, such as the DSDA mode. The communication mode may also include the combined mode of frequency bands of different duplex communication types. The control circuit may control, based on the communication mode configured for the communication device, the radio frequency module 20 to be conductively connected to the target transmission channel group and the target power supply, so as to match the corresponding communication mode.

The control circuit may be connected to the controlled terminal of each of the radio frequency switches and the power switches in the above embodiments or multiple combined embodiments. As such, by controlling the conduction state between the first terminal of each of the radio frequency switches and the power switches and the target at the second terminal thereof, the radio frequency module 20 may be controlled to be conductively connected to the target transmission channel group and the target power supply.

Exemplarily, the control circuit may include the radio frequency transceiver 10, and the radio frequency transceiver 10 controls the radio frequency module 20 to be conductively connected to the target transmission channel group and the target power supply, based on the communication mode currently configured for the communication device. The radio frequency transceiver 10 is configured with the first transmission channel group and the second transmission channel group, and is also configured with a control interface. The control interface includes one of a mobile industry processor interface (mipi) interface and a general purpose input output (GPIO) interface. The radio frequency transceiver 10 may send a switch switching control signal to each switch through the mipi interface or the GPIO interface, to switch the conduction state between the first terminal and each second terminal of the switch, thereby improving the control efficiency.

Exemplarily, the control circuit may further include an application processor (AP) and/or a baseband processor (BP). The AP and/or BP determines, based on the received communication instruction, the communication mode currently configured for the communication device, and then controls the radio frequency transceiver 10 to output a corresponding switch switching control signal.

In an embodiment, in a case where the communication device is configured to be connected to both a first SIM card and a second SIM card, the first transmission channel group is configured to output radio frequency signals for the first SIM card, and the second transmission channel group is configured to output radio frequency signals for the second SIM card.

The SIM card may be called a subscriber identity module card, a smart card, etc. Exemplarily, the first SIM card and the second SIM card may be installed on a circuit board inside the communication device. When the first SIM card and the second SIM card are installed on the circuit board inside the communication device, the communication device is configured to be connected to each of the first SIM card and the second SIM card. The first SIM card may be configured as an information storage device to store the user's identity information or the user's personal information, etc. The second SIM card may also be configured as an information storage device to store the user's identity information, the user's personal information, etc.

When the communication device is configured to be connected to each of the first SIM card and the second SIM card, and the communication device needs to transmit or receive data, the baseband processor would select an appropriate frequency band according to the network requirements and the configuration of the first SIM card and the second SIM card, convert the modulated signal into a radio frequency signal, and transmit the radio frequency signal to the corresponding first transmission channel group or second transmission channel group. Thus, the first transmission channel group can receive radio frequency signals corresponding to the first SIM card, and the second transmission channel group can receive radio frequency signals corresponding to the second SIM card.

The first SIM card may be configured to support communication of the first network standard, and the second SIM card may be configured to support communication of the second network standard. For the description of the first network standard and the second network standard, reference may be made to the above embodiments, which will not be repeated here. Since the first SIM card corresponds to the first transmission channel group and the second SIM card corresponds to the second transmission channel group, when the second SIM card performs communication, it will not affect the interaction and use of the first SIM card; and when the first SIM card performs communication, it will not affect the interaction and use of the second SIM card either. Thus, the communication device can realize dual-card dual-standby.

The division of each module, unit, and switch in the above communication device is only illustrative. In some other embodiments, the communication device may be divided into different modules, units, and switches as needed to complete all or part of the functions of the above communication device.

Based on the same inventive concept, the embodiments of the present disclosure further provide a communication control method and apparatus, a computer device, and a readable storage medium. The implementation solutions for solving the problems provided by the communication control method and apparatus, the computer device, and the readable storage medium are similar to the implementation solutions recorded in the above communication device, and for the specific definitions in the embodiments of the communication control method and apparatus, the computer device, and the readable storage medium provided below, reference may be made to the definitions on the above communication device, which will not be repeated here.

FIG. 6 is a flowchart of a communication control method provided in an embodiment. The communication control method of the embodiment is applied to a communication device. The communication device includes a radio frequency transceiver, multiple radio frequency modules, a radio frequency power supply, and an electric power supply. For the relevant description of the radio frequency transceiver, the multiple radio frequency modules, the radio frequency power supply, and the electric power supply, reference may be made to the above embodiments. As illustrated in FIG. 6, the communication control method includes operation 620 to operation 640.

At 620, when the communication device is configured to support a standalone mode, each radio frequency module ready for transmission is controlled to be conductively connected to the first transmission channel group, and the radio frequency power supply is controlled to output a radio frequency voltage to each radio frequency module ready for transmission, where the radio frequency voltage is determined based on power information of each radio frequency module ready for transmission.

At 640, when the communication device is configured to support a combined mode of frequency bands of different transmission channel groups, at least two radio frequency modules ready for transmission are controlled to be conductively connected to corresponding transmission channel groups respectively, the radio frequency power supply is controlled to output the radio frequency voltage to a radio frequency module of the at least two radio frequency modules that is conductively connected to one transmission channel group, and the electric power supply is controlled to output a power supply voltage to other radio frequency modules of the at least two radio frequency modules that are conductively connected to another transmission channel group.

In the communication control method of the embodiment, when the communication device is configured to support the standalone mode, each radio frequency module ready for transmission is controlled to be conductively connected to the first transmission channel group, and the radio frequency power supply is controlled to output a radio frequency voltage to each radio frequency module ready for transmission. Since the radio frequency voltage is determined based on the power information of each radio frequency module ready for transmission, it can ensure the greater power demand and higher radio frequency power consumption of each radio frequency module ready for transmission in the standalone mode, meeting more stringent frequency band coverage, signal quality, and user requirements. When the communication device is configured to support the combined mode of frequency bands of different transmission channel groups, the radio frequency power supply is controlled to output the radio frequency voltage to the radio frequency module(s) ready for transmission that is/are conductively connected to one transmission channel group, and the electric power supply is controlled to output the power supply voltage to the radio frequency module(s) ready for transmission that is/are conductively connected to another transmission channel group, thereby ensuring that different radio frequency modules simultaneously transmit radio frequency signals from different channel groups under the power supply of different power supplies. In this way, not only the non-standalone mode but also the DSDA mode are supported. Thus, through the communication control method of the embodiment, without adding an additional power supply, the communication device supporting the standalone mode can also support combined communication of more frequency bands on the basis of supporting the standalone mode, which improves the communication performance of the communication device and enhances the user experience.

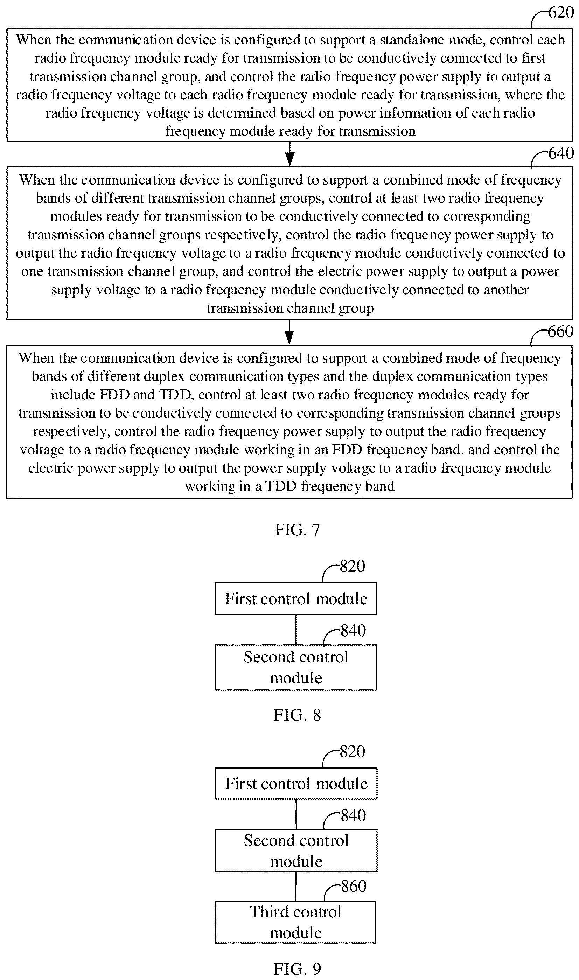

In an embodiment, as illustrated in FIG. 7, the communication control method further includes operation 660.

At 660, when the communication device is configured to support a combined mode of frequency bands of different duplex communication types, and the duplex communication types include FDD and TDD, at least two radio frequency modules ready for transmission are controlled to be conductively connected to corresponding transmission channel groups respectively, the radio frequency power supply is controlled to output the radio frequency voltage to a radio frequency module of the at least two radio frequency modules working in an FDD frequency band, and the electric power supply is controlled to output the power supply voltage to a radio frequency module of the at least two radio frequency modules working in a TDD frequency band.

By controlling the at least two radio frequency modules ready for transmission to be conductively connected to corresponding transmission channel groups respectively, and controlling the radio frequency power supply and the electric power supply to cooperate with each other, the power supply demand of each radio frequency module under different duplex communication types can be better matched, and the transmission quality of each radio frequency module can be improved.

It is notable that the above operations 620, 640, and 660 may be respectively executed by the control circuit in the above embodiments. Exemplarily, they may be implemented by the control circuit controlling each switch in the above embodiments. For relevant introduction, reference may be made to the relevant description of the above embodiments. The above operations 620, 640, and 660 may also be respectively executed by the communication control apparatus described in the following embodiment. For relevant introduction, reference may be made to the relevant description of the following embodiment. Exemplarily, they may be implemented by the communication control apparatus controlling each switch in the above embodiment.

In some other embodiments, the communication control method further includes: when the communication device is configured to support a combined mode of frequency bands of a same duplex communication type, such as working in the FDD frequency band or the TDD frequency band, for at least two radio frequency modules ready for transmission, controlling each of the at least two radio frequency modules to be conductively connected to one transmission channel group, controlling the radio frequency power supply to output a radio frequency voltage to a radio frequency module of the at least two radio frequency modules supporting a relatively higher frequency band, and controlling the electric power supply to output a power supply voltage to a radio frequency module of the at least two radio frequency modules supporting a relatively lower frequency band. Thus, it can better match the power supply demands of individual radio frequency modules of different frequency bands under the same duplex communication type, and improve the transmission quality of each radio frequency module.

FIG. 8 is a structural block diagram of a communication control apparatus provided in an embodiment. The communication control apparatus of this embodiment is configured to execute the corresponding operations of the communication control method, and is implemented in a communication device. As illustrated in FIG. 8, the communication control apparatus includes a first control module 820 and a second control module 840.

The first control module 820 is configured to, when the communication device is configured to support the standalone mode, control each radio frequency module ready for transmission to be conductively connected to the first transmission channel group, and control the radio frequency power supply to output a radio frequency voltage to each radio frequency module ready for transmission, where the radio frequency voltage is determined based on the power information of each radio frequency module ready for transmission.

The second control module 840 is configured to, when the communication device is configured to support a combined mode of frequency bands of different transmission channel groups, control at least two radio frequency modules ready for transmission to be conductively connected to corresponding transmission channel groups respectively, control the radio frequency power supply to output the radio frequency voltage to a radio frequency module of the at least two radio frequency modules that is conductively connected to one transmission channel group, and control the electric power supply to output a power supply voltage to other radio frequency modules of the at least two radio frequency modules that are conductively connected to another transmission channel group.

In the communication control apparatus of the embodiment, when the communication device is configured to support the standalone mode, the first control module 820 controls each radio frequency module ready for transmission to be conductively connected to the first transmission channel group, and controls the radio frequency power supply to output a radio frequency voltage to each radio frequency module ready for transmission. Since the radio frequency voltage is determined based on the power information of each radio frequency module ready for transmission, it can ensure the greater power demand and higher radio frequency power consumption of each radio frequency module ready for transmission in the standalone mode, meeting more stringent frequency band coverage, signal quality, and user requirements. When the communication device is configured to support the combined mode of frequency bands of different transmission channel groups, the second control module 840 controls the radio frequency power supply to output the radio frequency voltage to the radio frequency module(s) ready for transmission that is/are conductively connected to one transmission channel group, and controls the electric power supply to output the power supply voltage to the radio frequency module(s) ready for transmission that is/are conductively connected to another transmission channel group, thereby ensuring that different radio frequency modules simultaneously transmit radio frequency signals from different channel groups under the power supply of different power supplies. In this way, not only the non-standalone mode but also the DSDA mode are supported. Thus, through the communication control apparatus of the embodiment, without adding an additional power supply, the communication device supporting the standalone mode can also support combined communication of more frequency bands on the basis of supporting the standalone mode, which improves the communication performance of the communication device and enhances the user experience.

In an embodiment, as illustrated in FIG. 9, the communication control apparatus further includes a third control module 860.

The third control module 860 is configured to, when the communication device is configured to support a combined mode of frequency bands of different duplex communication types, and the duplex communication types include FDD and TDD, control at least two radio frequency modules ready for transmission to be conductively connected to corresponding transmission channel groups respectively, control the radio frequency power supply to output the radio frequency voltage to a radio frequency module of the at least two radio frequency modules working in the FDD frequency band, and control the electric power supply to output the power supply voltage to a radio frequency module of the at least two radio frequency modules working in the TDD frequency band.

By the third control module 860 controlling at least two radio frequency modules ready for transmission to be conductively connected to corresponding transmission channel groups respectively, and controlling the radio frequency power supply and the electric power supply to cooperate with each other, it can better match the power supply demands of individual radio frequency modules under different duplex communication types, and improve the transmission quality of each radio frequency module.

In some other embodiments, the third control module 860 may further be configured to: when the communication device is configured to support a combined mode of frequency bands of a same duplex communication type, such as working in the FDD frequency band or the TDD frequency band, for at least two radio frequency modules ready for transmission, control each of the at least two radio frequency modules to be conductively connected to one transmission channel group, control the radio frequency power supply to output the radio frequency voltage to a radio frequency module of the at least two radio frequency modules supporting a relatively higher frequency band, and control the electric power supply to output a power supply voltage to a radio frequency module of the at least two radio frequency modules supporting a relatively lower frequency band. Thus, it can better match the power supply demands of individual radio frequency modules of different frequency bands under the same duplex communication type, and improve the transmission quality of each radio frequency module.

The embodiments of the present disclosure further provide a computer device including a memory and a processor. The memory stores a computer program which, when being executed by the processor, causes the operations of the communication control method in any of the above embodiments to be implemented.

The embodiments of the present disclosure further provide a readable storage medium storing a computer program thereon. The computer program, when being executed by a processor, causes the operations of the communication control method in any of the above embodiments to be implemented.

The present disclosure further provides a computer program product including a computer program. The computer program, when being executed by a processor, causes the operations of the communication control method in the above embodiment to be implemented.

Any reference to a memory, storage, database, or other medium used in the present disclosure may include a non-volatile and/or a volatile memory. Suitable non-volatile memory may include read-only memory (ROM), programmable ROM (PROM), electrically programmable ROM (EPROM), electrically erasable programmable ROM (EEPROM), or flash memory. The volatile memory may include random access memory (RAM), which acts as external cache memory. By way of illustration and not limitation, RAM is available in various forms such as static random access memory (SRAM) and dynamic random access memory (DRAM).

The technical features of the above embodiments can be combined arbitrarily. To make the description concise, not all possible combinations of the technical features in the above embodiments are described. However, as long as there is no contradiction in the combination of these technical features, they should be considered as falling within the scope of the description.

The above embodiments only illustrate several implementations of the present disclosure, and the description thereof is relatively specific and detailed, but it cannot be regarded as limitation on the scope of the present disclosure. It is be notable that, several modifications and improvements can be made by those ordinary skilled in the art without departing from the concept of the present disclosure, and all of them fall within the scope of protection of the present disclosure. Therefore, the scope of protection of the present disclosure should be subject to the appended claims.

## Claims

1. A communication device, comprising:
a radio frequency power supply (30) and an electric power supply (40);
a radio frequency transceiver (10) comprising a first transmission channel group and a second transmission channel group, wherein each of the first transmission channel group and the second transmission channel group comprises a plurality of transmission channels; and
a plurality of radio frequency modules (20), wherein at least one of the plurality of radio frequency modules (20) is switchably connected to the first transmission channel group or the second transmission channel group;
wherein when the communication device is configured to support a standalone mode, each radio frequency module ready for transmission is conductively connected to the first transmission channel group, and the radio frequency power supply (30) is configured to output a radio frequency voltage to the each radio frequency module ready for transmission, the radio frequency voltage being determined based on power information of the each radio frequency module ready for transmission; and
when the communication device is configured to support a combined mode of frequency bands of different transmission channel groups, for at least two radio frequency modules ready for transmission, the radio frequency power supply (30) is configured to output the radio frequency voltage to a radio frequency module of the at least two radio frequency modules that is conductively connected to one transmission channel group, and the electric power supply (40) is configured to output a power supply voltage to other radio frequency modules of the at least two radio frequency modules that are conductively connected to another transmission channel group.

2. The communication device of claim 1, wherein the plurality of radio frequency modules (20) comprises:
a first radio frequency module (201), wherein the first radio frequency module (201) is switchably connected to the radio frequency power supply (30) or the electric power supply (40), and is switchably connected to the first transmission channel group or the second transmission channel group, and the first radio frequency module (201) is configured to support transmission of radio frequency signals of a first frequency band; and
a second radio frequency module (202), wherein the second radio frequency module (202) is connected to the radio frequency power supply (30) and the first transmission channel group, and is configured to support transmission of radio frequency signals of a second frequency band, the second frequency band being higher than the first frequency band;
wherein when the communication device is configured to support a combined mode of the first frequency band and the second frequency band of different transmission channel groups, the radio frequency power supply (30) is configured to output the radio frequency voltage to the second radio frequency module (202) conductively connected to the first transmission channel group, and the electric power supply (40) is configured to output the power supply voltage to the first radio frequency module (201) conductively connected to the second transmission channel group.

3. The communication device of claim 2, wherein the first radio frequency module (201) comprises:
a high frequency processing unit (220), wherein the high frequency processing unit (220) is switchably connected to the radio frequency power supply (30) or the electric power supply (40), and is switchably connected to the first transmission channel group or the second transmission channel group, and the high frequency processing unit (220) is configured to support transmission of radio frequency signals of a high frequency band; and
a medium frequency processing unit (210), wherein the medium frequency processing unit (210) is switchably connected to the radio frequency power supply (30) or the electric power supply (40), and is switchably connected to the first transmission channel group or the second transmission channel group, and the medium frequency processing unit (210) is configured to support transmission of radio frequency signals of a medium frequency band;
wherein when the communication device is configured to support a combined mode of the high frequency band and the medium frequency band of different transmission channel groups, the electric power supply (40) is configured to output the power supply voltage to the medium frequency processing unit (210), and the radio frequency power supply (30) is configured to output the radio frequency voltage to the high frequency processing unit (220).

4. The communication device of claim 3, wherein the communication device further comprises a first radio frequency switch (501), a second radio frequency switch (502), a first power switch (601), and a second power switch (602),
wherein the high frequency processing unit (220) is switchably connected to the first transmission channel group or the second transmission channel group through the second radio frequency switch (502), and the high frequency processing unit (220) is switchably connected to the radio frequency power supply (30) or the electric power supply (40) through the second power switch (602); and
the medium frequency processing unit (210) is switchably connected to the first transmission channel group or the second transmission channel group through the first radio frequency switch (501), and the medium frequency processing unit (210) is switchably connected to the radio frequency power supply(30) or the electric power supply (40) through the first power switch (601).

5. The communication device of any one of claims 2 to 4, wherein the plurality of radio frequency modules (20) further comprise:
a third radio frequency module (203), wherein the third radio frequency module (203) is switchably connected to the radio frequency power supply (30) or the electric power supply (40), and is switchably connected to the first transmission channel group or the second transmission channel group, and the third radio frequency module (203) is configured to support transmission of radio frequency signals of a third frequency band, the third frequency band being lower than the first frequency band;
wherein the combined mode of frequency bands of different transmission channel groups comprises combined modes of any two frequency bands among the first frequency band, the second frequency band, and the third frequency band; and when the communication device is configured to support the combined mode of frequency bands of different transmission channel groups, for the at least two radio frequency modules ready for transmission, the radio frequency power supply (30) is configured to output the radio frequency voltage to a radio frequency module of the at least two radio frequency modules supporting a relatively higher frequency band, and the electric power supply (40) is configured to output the power supply voltage to a radio frequency module of the at least two radio frequency modules supporting a relatively lower frequency band.

6. The communication device of claim 5, wherein the communication device further comprises a third radio frequency switch (503) and a third power switch (603);
the third radio frequency module (203) is switchably connected to the first transmission channel group or the second transmission channel group through the third radio frequency switch (503), and the third radio frequency module (203) is switchably connected to the radio frequency power supply (30) or the electric power supply (40) through the third power switch (603).

7. The communication device of any one of claims 5 and 6, wherein the first frequency band comprises a medium frequency band and a high frequency band; the second frequency band comprises an ultra-high frequency band; and the third frequency band comprises a low frequency band.

8. The communication device of any one of claims 1 to 7, wherein when the communication device is configured to support a combined mode of frequency bands of different duplex communication types, and the duplex communication types comprise frequency division duplexing, FDD, and time division duplexing, TDD, for the at least two radio frequency modules ready for transmission, each of the at least two radio frequency modules is conductively connected to one transmission channel group, the radio frequency power supply (30) is configured to output the radio frequency voltage to a radio frequency module of the at least two radio frequency modules working in an FDD frequency band, and the electric power supply (40) is configured to output the power supply voltage to a radio frequency module of the at least two radio frequency modules working in a TDD frequency band.

9. The communication device of any one of claims 1 to 7, wherein when the communication device is configured to support a combined mode of frequency bands of a same duplex communication type, for the at least two radio frequency modules ready for transmission, each of the at least two radio frequency modules is conductively connected to one transmission channel group, the radio frequency power supply (30) is configured to output the radio frequency voltage to a radio frequency module of the at least two radio frequency modules supporting a relatively higher frequency band, and the electric power supply (40) is configured to output the power supply voltage to a radio frequency module of the at least two radio frequency modules supporting a relatively lower frequency band.

10. The communication device of any one of claims 1 to 9, wherein the communication device further comprises:
a control circuit, configured to control the radio frequency module to be conductively connected to a target transmission channel group and a target power supply, based on a communication mode configured for the communication device.

11. The communication device of claim 10, wherein the target transmission channel group comprises any one of the first transmission channel group and the second transmission channel group, the target power supply comprises any one of the radio frequency power supply (30) and the electric power supply (40), and the communication mode configured for the communication device comprises any one of the standalone mode, the combined mode of frequency bands of different transmission channel groups, a combined mode of frequency bands of different duplex communication types, and a combined mode of frequency bands of a same duplex communication type.

12. The communication device of any one of claims 1 to 11, wherein the radio frequency power supply (30) comprises a radio frequency power management chip supporting multi-level voltage output; and the electric power supply (40) comprises a battery module.

13. The communication device of any one of claims 1 to 12, wherein when the communication device is configured to be connected to both a first SIM card and a second SIM card, the first transmission channel group is configured to output radio frequency signals for the first SIM card, and the second transmission channel group is configured to output radio frequency signals for the second SIM card.

14. A communication control method, for a communication device, wherein the communication device comprises a radio frequency transceiver (10), a plurality of radio frequency modules (20), a radio frequency power supply (30), and an electric power supply (40), the radio frequency transceiver (10) comprises a first transmission channel group and a second transmission channel group, and each of the first transmission channel group and the second transmission channel group comprises a plurality of transmission channels; the communication control method comprises:
in response to the communication device being configured to support a standalone mode, controlling each radio frequency module ready for transmission to be conductively connected to the first transmission channel group, and controlling the radio frequency power supply (30) to output a radio frequency voltage to the each radio frequency module ready for transmission, the radio frequency voltage being determined based on power information of each radio frequency module ready for transmission (620); and
in response to the communication device being configured to support a combined mode of frequency bands of different transmission channel groups, controlling at least two radio frequency modules ready for transmission to be conductively connected to corresponding transmission channel groups respectively, controlling the radio frequency power supply (30) to output the radio frequency voltage to a radio frequency module of the at least two radio frequency modules that is conductively connected to one transmission channel group, and controlling the electric power supply (40) to output a power supply voltage to other radio frequency modules of the at least two radio frequency modules that are conductively connected to another transmission channel group (640);
wherein at least one of the plurality of radio frequency modules (20) is switchably connected to the first transmission channel group or the second transmission channel group.

15. The communication control method of claim 14, wherein the communication control method further comprises:
in response to the communication device being configured to support a combined mode of frequency bands of different duplex communication types and the duplex communication types comprising frequency division duplexing, FDD, and time division duplexing, TDD, controlling the at least two radio frequency modules ready for transmission to be conductively connected to corresponding transmission channel groups respectively, controlling the radio frequency power supply (30) to output the radio frequency voltage to a radio frequency module of the at least two radio frequency modules working in an FDD frequency band, and controlling the electric power supply (40) to output the power supply voltage to a radio frequency module of the at least two radio frequency modules working in a TDD frequency band (660).
